## Europäisches Patentamt
## European Patent Office
## Office européen des brevets

(19)

(11) Veröffentlichungsnummer: **0 119 298**
**B1**

(12)

# EUROPÄISCHE PATENTSCHRIFT

(45) Veröffentlichungstag der Patentschrift:
**24.09.86**

(51) Int. Cl.⁴: **B 01 D 46/34,** B 05 C 15/00

(21) Anmeldenummer: **83110851.9**

(22) Anmeldetag: **29.10.83**

(54) **Verfahren und Vorrichtung zum Abscheiden von Farbpartikeln aus der Abluft von Farbspritzanlagen.**

(30) Priorität: **14.01.83 DE 3301055**

(43) Veröffentlichungstag der Anmeldung:
**26.09.84 Patentblatt 84/39**

(45) Bekanntmachung des Hinweises auf die Patenterteilung:
**24.09.86 Patentblatt 86/39**

(84) Benannte Vertragsstaaten:
**BE CH FR GB IT LI LU NL SE**

(56) Entgegenhaltungen:
**EP-A-0 045 729**
**DE-A-2 741 031**
**US-A-3 151 187**

**Patent Abstracts of Japan, Band 7, Nr. 77, 30. März 1983**

(73) Patentinhaber: **Kleinewefers Energie- und Umwelttechnik GmbH, Kleinewefers-Kalanderstrasse, D-4150 Krefeld 1 (DE)**

(72) Erfinder: **Staschik, Günter, Dipl.- Ing., Dahlhauser Strasse 6, D-5750 Menden (DE)**

(74) Vertreter: **Andrejewski, Walter, Patentanwälte Andrejewski, Honke & Partner Postfach 10 02 54 Theaterplatz 3, D-4300 Essen 1 (DE)**

## Beschreibung

Die Erfindung betrifft ein Verfahren zum Abscheiden von Farbpartikeln aus der Abluft von Farbspritzanlagen, wonach die Abluft durch ein von oben nach unten wanderndes Filter orthogonal zu dessen Bewegungsrichtung gefürt und das mit Farbpartikeln benetzte Filter nach dem Ausschleusen am unter dem Filter befindlichen Austrittsende von den Farbpartikeln befreit sowie das gereinigte Filter zurücksgeführt wird.

Die Verarbeitung von Lacken mit Spritzpistolen, z. B. in Spritzkabinen von Farbspritzanlagen zum Lackieren von Kfz-Karosserien, verlangt Maßnahmen, die ein schnelles und einwandfreies Abfüren der anfallenden Farbnebel bzw. Farbpartikel und Lacklösungsmittel gewährleisten. Um die Abluft von den Farbpartikeln zu reinigen, werden beispielsweise Trockenoder Naßabscheider eingesetzt, wobei letztere nach dem Sprüdosen-, Kaskaden- oder Venturiprinzip arbeiten. Jedoch arbeiten derartige Naßabscheider unbefriedigend, weil einerseits nur eine verhältnismäßig grobe Abscheidung der Farbpartikel stattfindet, andererseits ein hoher Energieanteil mit der Abluft verloren geht. Hohe Energieverluste treten insbesondere dann ein, wenn leistungsstarke Abluftanlagen eingesetzt werden, deren hohe, zum staubfreien Lackaufbringen erforderlichen Abluftströme die Konzentration von Farbpartikeln und Lösungsmitteldampfen reduzieren sollen, dennoch zu erheblichen Emissionen dieser Wertstoffgehalte und überdies Energiegehalte führen. Zwar kennt man auch thermische und katalytische Reinigungsverfahren zur Reduzierung dieser Emissionen, jedoch wird auch deren Einsatz durch hohe Energiekosten für die Erwärmung der Abluft auf Reaktionstemperatur begrenzt. Der Einsatz von Wärmerückgewinnungsanlagen ist wirtschaftlich erst dann möglich, wenn das vollständige Abscheiden der Farbpartikel gelingt, die anders nachgeschältete Anlags in kürzester Zeit unbrauchbar machen. Eine wirtschaftliche Rückgewinnung der Lösungsmittel durch z. B. adsorptive Entfernung aus der Abluft steht ebenfalls erst dann zur Verfügung, wenn zuvor die Farbpartikel in der Abluft vollständig entfernt werden können. Zwar hat man für diesen Zweck auch schon Filteranlagen eingesetzt, die jedoch ebenfalls alsbald verschmutzen. Daraus resultiert hoher Wartungsaufwand.

Das gilt beispielsweise für ein Verfahren der eingangs beschriebenen Art, bei welchem die Farbpartikel mit Hilfe eines Filtergewebes aus der Abluft abgeschieden werden. Das Filtergewebe ist als endloses Gewebeband ausgeführt, welches in vertikaler Anordnung antreibbar ist und einen Behälter mit Reinigungsflössigkeit sowie mit einem Schaber durchläuft. Die das Filtergewebe horizontal durchdringende Abluft durchwandert nicht nur zwei Gewebesträngе,

sondern hinter diesem endlosen Filterband ist ein weiterer Filter angeordnet. Danach erfährt die gereinigte Abluft eine 90⁰C-Ablenkung und wird nach horizontalem Filterdurchtritt in vertikaler Richtung abgesaugt. Daraus resultiert auch anlagentechnischer Aufwand (vgl. EP-A 00 45 729).

Auf einem anderen Sachgebiet der Technik, nämlich zum Reinigen von Gasen ist ein Verfahren bekannt, wonach das jeweilige Gas durch einen Filter mit wandernder bzw. transportierter Schüttgutschicht horizontal hindurchgeführt wird. Die Schüttgutschicht wird im Einlaufbereich und Auslaufbereich mit einem Waschmittel besprücht (vgl. US-A 31 51 187). Ähnlich liegen die Verhältnisse bei einem anderen Verfahren zum Reinigen von Gas, wonach das zu reinigende Gas zwischen Gassintritt und Gasaustritt in einen Winkel von 90°C umgelenkt wird (vgl.DE-A 27 41 031). - Durch diese bekannten Maßnahmen sind die Probleme um die Reinigung der Abluft aus Farbspritzanlagen nicht maßgebend beeinfluß worden.

Der Erfindung leigt die Aufgabe zugrunde, ein Verfahren zum vollständigen Abscheiden von Farbpartikeln bzw. Farbnebeln aus der Abluft von Farbspritzanlagen anzugeben, um einerseits eine wirtschaftliche Rückgewinnung der Wärmeenergie und andererselts der Lösungsmittel aus der Abluft zu ermöglichen, wobei der Luftförderaufwand den bekannter Verfahren nicht übersteigt.

Diese Aufgabe löst die Erfindung bei einen gattungsgemäßen Verfahren dadurch, daß als Filter eine zwischen einer Anströmwandung mit Ablufteintritts-Öffnungen und einer mit vorgegebenem Abstand und parallel zur Anströmwandung angeordneten Abströmwandung mit Reinluftaustrittsöffnungen wandernde Schüttschicht aus Filter-Wälzkörpern verwendet wird und daß die Zu- bzw. Abfuhr der Filter-Wälzkörper über Schleusen erfolgt. - Diese Maßnahmen der Erfindung haben zur Folge, daß Abscheiden der Farbpartikel aus der Abluft auf adsorptivem Wege erfolgt, und zwar ohne Verschmutzungsgefahr, weil die Filter-Wälzkörper in der kontinuierlich wandernden Schüttschicht ständig bewegt werden, so daß sie zwar eine vollständige Abscheidung der Farbpartikel aus der durchströmenden Abluft sicherstellen, jedoch ein Zusammenkleben der mit Fahrpartikeln benetzten Filter-Wälzkörper verhindert wird. Besonders hohe Abscheidegrade werden dann erreicht, wenn die Schüttschicht mit einer Anströmgeschwindigkeit von ca. 1 m/sec. von der zu reinigenden Abluft angeströmt wird. Bei einer Schichtdicke von 10 cm beträgt die Druckdifferenz otwa 500 N/m². Vorzugsweise werden die Farbpartikel in einem Lösungsmittelbad entfernt. Sei der Verwendung von Lacken mit einem hohen Anteil an teuren Pigmenten läßt sich sogar eine wirtschaftliche Rückgewinnung der Farbpartikel bzw. entsprechenden Feststoffen durchführen.

Weitere vorteilhafte Ausgestaltungen der Erfindung sind im folgenden aufgeführt. So kann eine Anströmwandung mit kiemenartig geformten Leitblechen verwendet werden. Vorzugsweise werden als Filter-Wälzkörper Glaskugeln verwendet, deran Kugeldurchmesser zwischen 1 mm und 3 mm beträgt. In diesem Zusammenhang wird zweckmäßigerweise in einer Glaskugelschüttung bis zu 10 cm Schichtdicke gearbetet, um unter Berücksichtigung einer Anströmgeschwindigkeit der Abluft von etwa 1 m/sec einerseits hohe Abscheidegrade zu erreichen, andererseits geringe Druckverluste.

Die durch die Erfindung erreichten Vorteile sind im wesentlichen darin zu sehen, daß sich mit dem erfindungsgemäßen Verfahren und der zu seiner Durchfürung geeigneten Vorrichtung Farbpartikel aus der Abluft von Farbspritzanlagen in wirtschaftlicher Weise vollständig entfernen lassen. Tatsächlich wird für die Abluft ein solcher Reinheitsgrad erzielt, daß nachgeschaltete Anlagen wie Wärmerückgewinnungsanlagen, z.B. ein rekuperativer Wärmeaustauscher und/oder Adsorptionsanlagen zur Rückgewinnung von Lösungsmittel ohne Verschmutzungsgefahr eingesetzt werden können. Dadurch entfällt nicht nur die sonst praktizierte und aufwendige Naßauswaschung, sondern es wird eine manuelle Spritzlackierung mit im Kreislauf geführter Spritzkabinenluft möglich. Darüber hinaus werden gegenüber der Naßauswaschung höhere Abscheidergrade bei annähernd gleichen Luftförderungskosten erreicht, entfallen sonstige Kosten für Abwasserreinigung und ist sogar die Rückgewinnung eines wasserfreien Lackschlammes möglich. Jedenfalls ermöglicht die Lehre der Erfindung eine optimale Enerige- und Werkstoffrückgewinnung und folglich Reduzierung der Kosten bei Farbspritzanlagen. Rückgewinnbare Werkstoffe sind Lösungsmittel und Lacke bzw. Lackbestandteile.

Im folgenden wird die Erfindung anhand einer lediglich ein Ausführungsbeispiel darstellenden Zeichnung näher erläutert: es zeigen:

Fig. 1 in schematischer Darstellung eine Anlage zum Abscheiden von Farbpartikeln aus der Abluft einer Farbspritzanlage und

Fig.2 ausschnittsweise im Vertikalschnitt einen erfindungsgemäßen Filter für den Gegenstand nach Fig. 1.

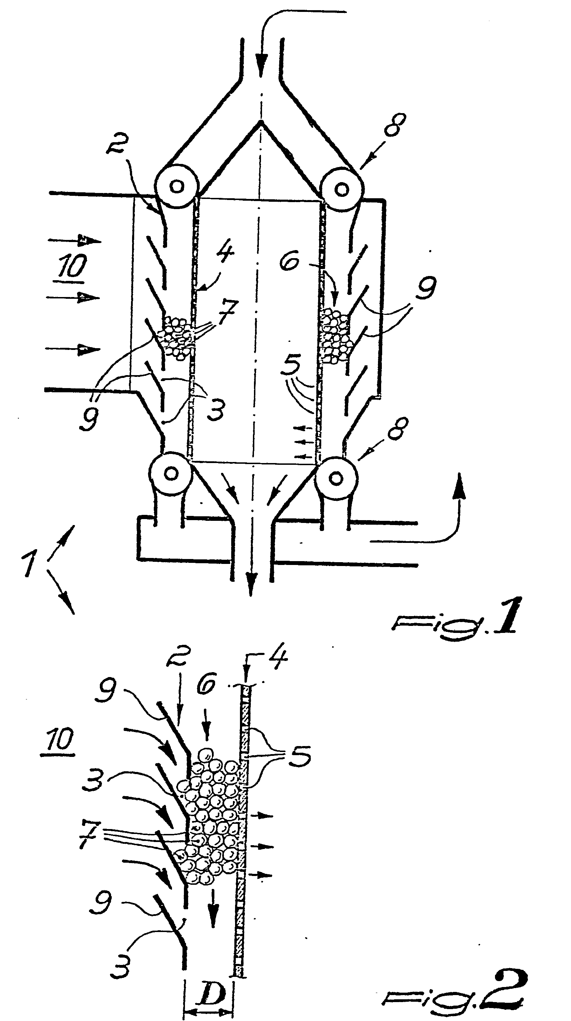

In den Figuren ist eine Vorrichtung zum Abscheiden von Farbpartikeln bzw. Farbnebeln aus der Abluft von Farbspritzanlagen dargestellt. Diese Vorrichtung ist gekennzeichnet durch einen Filter 1 mit einer Anströmwandung 2 mit Ablufteintrittsöffnungen 3 und einer mit vorgegebenem Abstand und parallel zu der Anströmwandung 2 angeordneten Abströmwandung 4 mit Reinluftaustrittsöffnungen 5 und mit einer zwischen beiden Wandungen 2, 4 abwärts wandernden Schüttschicht 6 vorgegebener Schichtdicke D und variabler Schichthöhe aus Filter-Wälzkörpern 7 sowie mit am Eintrittsende und Austrittsende der gebildeten Filterstufe angeordneten Schleusen 6 zum Ein- bzw. Ausschleusen der Filter-Wälzkörper. Bei den Schleusen 8 kann es sich um Zellenradschleusen handeln, die nicht dargestellt sind. Die Anströmwandung 2 und die Abströmwandung 4 bilden einen Doppelzylinder in vertikaler Orientierung mit horizontalen Ablufteintrittsöffnungen 3 und Reinluftaustrittsöffnungen 5.

Die Anströmwandung 2 bzw. Ablufteintrittsöffnungen 3 sind von kiemenartig geformten Leitblechen 9 gebildet, um die Abwärtsbewegung der Schüttschicht 6 nicht zu stören. Die Abströmwandung 4 ist als Lochblech ausgebildet. Die Filter-Wälzkörper bestehen aus Glas und sind als Glaskugeln 7 ausgebildet. Der Kugeldurchmesser beträgt zwischen 1 mm und 3 mm. Die Schichtdecke D der Glaskugelschüttung beträgt bis zu 10 cm.

Nach Lehre der Erfindung wird die zu reinigende Abluft 10 durch den Filter 1 mit der abwärts wandernden Schüttschicht 6 aus Glaskugeln 7 orthogonal bzw. quer zu deren Bewegungsrichtung geführt. Die dadurch mit Farbpartikeln benetzten Glaskugeln 7 werden nach dem Ausschleusen aus dem Austrittsende des Filters 1 von diesen Farbpartikeln befreit. Die gereinigten Glaskugeln 7 werden danach zu dem Eintrittsende des Filters 1 zurückgeführt und dort wieder in den Filter 1 eingeschleust, so daß die Schüttschicht 6 gleichsam kontinuierlich im Kreislauf wandert, ohne daß Verschmutzungsgefahr bis zur Funktionsuntüchtigkeit zu befürchten ist. Die Glaskugelschüttung wird mit einer Anströmgeschwindigkeit von ca. 1 m/sec. von der zu reinigenden Abluft 10 angeströmt. Die Farbpartikel werden in einem Lösungsmittelbad von den Glaskugeln 7 entfernt. Ein geeignetes Fördersystem sorgt für die Rückführung in den Filter.

## Patentansprüche

1. Verfahren zum Abscheiden von Farbpartikeln aus der Abluft von Farbspritzanlagen, wonach die Abluft durch ein von oben nach unten wanderndes Filter orthognoal zu dessen Bewegungsrichtung geführt und das mit Farbpartikeln benetzte Filter nach dem Ausschleusen am unter dem Filter befindlichen Austrittsende von den Farbpartikeln befreit sowie das gereinigte Filter zurükgeführt wird, dadurch gekennzeichnet, daß als Filter eine zwischen einer Anströmwandung mit Ablufteintrittsöffnungen und einer mit vorgegebenem Abstand und parallel zur Anströmwandung angeordneten Abströmwandung mit Reinluftaustrittsöffnungen wandernde Schüttschicht aus Filter-Wälzkörpern verwendet wird und daß die Zu- bzw. Abfuhr der Filter-Wälzkörper über Schleusen erfolgt.

2. Verfahren nach Anspruch 1, dadurch gekennzeichnet, daß die Farbpartikel in einen Lösungsmittel entfernt werden.

3. Verfahren nach Anspruch 1 oder 2, dadurch gekennzeichnet, daß die Schüttschicht mit einer Anströmgeschwindigkeit von ca. 1m/sec. von der zu reinigenden Abluft angeströmt wird.

4. Verfahren nach einem der Ansprüche 1 bis 3, dadurch gekennzeichnet, daß eine Anströmwandung mit kiemenartig geformten Leitblechen verwendet wird.

5. Verfahren nach einem der Ansprüche 1 bis 4. dadurch gekennzeichnet, daß als Filter-Wälzkörper Glaskugeln verwendet werden.

6. Verfahren nach einem der Ansprüche 1 bis 5, dadurch gekennzeichnet, daß als Filter eine Glaskugelschüttung mit einer Schichtdicke bis zu 10 mm verwendet wird.

## Claims

1. A process for elimination paint particles from the air exhaust of spray paint plants, in which process filter material moves from above to below, and the air exhaust is passed through the filter material, orthogonally to the direction of movement of the filter material, and after removal of the filter material wetted with paint particles from a discharge end located at the bottom of a filter body, the paint particles are removed from the filter material and the cleaned filter material is returned, characterized in that a free-flowing charge of rolling filter particles is used as filter material, moving between an inflow wall having exhaust air inlets and an outflow wall having purified air outlets and being parallel to, and at a given distance from, the inflow wall, and that the admission and removal of the rolling filter particles takes place through sluice-gates.

2. A process according to Claim 1, characterized in that the paint particles are removed by a solvent.

3. A process according to Claim 1 or 2, characterized in that the exhaust air that is to be purified passes through the free-flowing charge of particles at a velocity of about 1 meter per second.

4. A process according to one of Claims 1 to 3, characterized in thet an inflow wall with gill-shaped fins is used.

5. A process according to one of Claims 1 to 4, characterized in that glass spheres are used as the rolling filter particles.

6. A process according to one of Claims 1 to 5, characterized in that a free-flowing charge of glass spheres in a layer up to 10 cms. thick is used as filter material.

## Revendications

1. Procédé pour éliminer des particules de peinture de l'air d'échappement d'une installation de peinture au pistolet, dans lequel l'air d'échappement traverse, selon un mouvement de haut en bas, un filtre disposé perpendiculairement à la direction du déplacement de l'air et dans lequel le filtre ayant recueilli les particules de peinture peut être retiré au-delà de moyens de séparation par une extrémité de sortie située sous le filtre de telle sorte que celui-ci, une fois nettoyé, puisse être réutilisé, caractérisé en ce qu'on utilise comme filtre une couche granulaire broyée d'un matériau de filtrage, disposée entre une paroi d'entrée avec des ouvertures d'admission de l'air et une paroi de sortie montée à distance donnée, parallèlement à la paroi d'entrée, avec des ouvertures de sortie de l'air filtré, et en ce que la mise en place ou le retrait de la couche filtrante s'effectue par dessus les moyens de séparation.

2. Procédé selon la revendication 1, caractérisé en ce que on élimine les particules de peinture dans un solvant.

3. Procédé selon l'une des revendications 1 ou 2, caractérisé en ce que la couche granulaire est mise en mouvement avec une vitesse d'entraînement d'environ 1 mètre par seconde par l'air à filtrer.

4. Procédé selon l'une quelconque des revendications 1 à 3, caractérisé en ce que la paroi d'entrée est munie de toles de guidage en forme d'ouies.

5. Procédé selon l'une quelconque des revendications 1 à 4, caractérisé en ce que on utilise des billes de verre comme matériau granulaire de filtrage.

6. Procédé selon l'une quelconque des revendications 1 à 5, caractérisé en ce que on utilise comme matériau granulaire de filtrage des billes de verre avec une épaisseur de la couche pouvant aller jusqu'à 10 centimètres.

Fig.1

Fig.2